# EUROPEAN PATENT APPLICATION

(11) **EP 1 538 813 A1**
(43) Date of publication of application: **08.06.2005**
(21) Application number: 03795247.0
(22) Date of filing: 28.08.2003
(51) Int. Cl.: H04M 1/00, H02J 7/04, H04Q 7/38, H04B 7/26

(54) **MULTI-MODE COMMUNICATION TERMINAL**

(30) Priority: 12.09.2002 JP 2002266919
(71) Applicant: MATSUSHITA ELECTRIC INDUSTRIAL CO., LTD., Kadoma-shi, Osaka 571-8501 (JP)
(72) Inventor: ITO, Takashi, Yokosuka-shi, Kanagawa 239-0847 (JP); TOYOSHIMA, Shigeru, Yokohama-shi, Kanagawa 226-0006 (JP)
(74) Representative: Grünecker, Kinkeldey, Stockmair & Schwanhäusser Anwaltssozietät
(86) International application number: PCT/JP2003/010974
(87) International publication number: WO 2004/025930

(57) **Abstract**

The present invention aims to provide a multimode communication terminal capable of controlling a charging operation in accordance with a communication schema during communication for each of plural communication schemas.

The terminal includes a first communication unit 10 for communicating based on the first communication schema, a second communication unit 11 for communicating based on the second communication schema, a communication schema switching unit 12 for selecting one of the first communication unit 10 and the second communication unit 11 thereby to switch the communication schema, a control unit 13 for managing the selection states of the communication schema switching unit 12 and a charging control method switching unit 14, a first charging control unit 15 for controlling the charging operation of a secondary battery 17 when the first communication unit 10 is selected, a second charging control unit 16 for controlling the charging operation of the secondary battery 17 when the first communication unit 10 is selected, the charging control method switching unit 14 for selecting one of the first charging control unit 15 and the second charging control unit 16 thereby to switch the charging control method, and the secondary battery 17 whose charging operation is controlled by the first charging control unit 15 or the second charging control unit 16.

## Description

### <Technical Field>

The present invention relates to a multimode communication terminal capable of controlling a charging operation in accordance with a communication schema during communication for each of a plurality of communication schemas.

### <Background Art>

A secondary battery has been mainly used as the power source of a mobile communication terminal. As disclosed in JP-A-5-111184, for example, the charging operation of a secondary battery has been controlled in such a manner that constant current control is performed so as to make a charging current constant until the battery voltage of the secondary battery reaches a predetermined value, then constant voltage control is performed so as to make the battery voltage constant after the battery voltage reaches the predetermined value, then the charging current is monitored during the constant voltage control and the charging operation is terminated when the charging current reduces to a predetermined value or less.

In a mobile communication terminal for the TDMA communication schema such as GSM or PDC, a time-division radio signal is transmitted and received. In such a terminal, since a large electric power is required at the time of transmission, a consumption power of the terminal temporally changes extremely during the communication. As a result, it is difficult to measure a charging current supplied to a secondary battery and the battery voltage of the secondary battery. Thus, during the communication, even when the battery voltage of the secondary battery reaches a predetermined value, the aforesaid constant voltage control is not carried out. That is, instead of carrying out the constant voltage control, the charging control is performed in a manner that the charging operation is temporarily stopped and restarted after the termination of the communication or that a charging current is controlled so as not to be an overcurrent but to be a predetermined value or less by setting the charging voltage to a low value.

In the mobile communication terminal for the W-CDMA communication schema, since the temporal changing degree of a consumption power during the communication is small as compared with the TDMA communication schema, it is easy to measure a charging current supplied to a secondary battery and the battery voltage of the secondary battery. Thus, in the case of the W-CDMA communication schema, the aforesaid constant voltage control can be carried out even during the communication.

### (Patent Document 1)

### JP-A-5-111184

In this manner, since the temporal changing degree of a consumption power during the communication differs depending on the communication schema, it is preferable to suitably perform the charging control of a secondary battery depending on the communication schema. However, the conventional charging control was not differentiated depending on the communication schema. Thus, when communication is performed during the charging operation of a secondary battery in a multimode communication terminal conformed to both the TDMA communication schema and the W-CDMA communication schema, for example, a charging current and a battery voltage can be measured accurately when the communication is performed based on the W-CDMA communication schema but can not be measured accurately when the communication is performed based on the TDMA communication schema.

In the conventional charging control operation, when a charging current can not be measured accurately in a manner that the charging current is measured as a value smaller than an actual current value, the charging operation is terminated even when the battery is not fully charged. In contrast, in the case where the charging current is measured as a value larger than an actual current value, the charging operation is continued even when it becomes a state to terminate the charging operation. Particularly, in the latter case, there arises a problem that an overvoltage is applied to the secondary battery. Further, in the conventional charging control operation, when a battery voltage can not be measured accurately in a manner that the charging voltage is measured as a value smaller than an actual voltage value, an overvoltage may be applied to the secondary battery during the charging operation.

In order to avoid such problems, the charging operation may be temporarily stopped when the communication schema is switched during the charging operation. However, in this case, although the charging operation can be performed normally during the communication operation based on the W-CDMA communication schema, since the charging operation is temporarily stopped, there arises a problem that it takes a long time to complete the charging operation.

The invention is made in view of the aforesaid problems of the conventional technique and an object of the invention is to provide a multimode communication terminal which can control a charging operation in accordance with a communication schema during communication for each of a plurality of communication schemas.

### <Disclosure of the invention>

In order to attain the aforesaid object, the multimode communication terminal according to the invention is arranged in a manner that in the multimode communication terminal which includes a secondary battery and controls a charging operation of the secondary battery in accordance with a communication schema during communication, the multimode communication terminal includes: communication means capable of communicating in accordance with a plurality of communication schemas; communication schema switching means for controlling the communication means in a manner that a communication schema is switched into a designated communication schema among the plurality of communication schemas thereby to communicate in accordance with the designated communication schema; charging control means for controlling a charging operation of the secondary battery by a different charging control method in accordance with each of the plurality of communication schemas; and charging control method selecting means for selecting the charging control method for charging the secondary battery by the charging control means in accordance with the communication schema of communication being performed by the communication means. Accordingly, the charging operation can be controlled in accordance with the communication schema during communication so as to conform to each of a plurality of the communication schemas.

Further, the multimode communication terminal according to the invention further includes: battery voltage detection means for detecting a battery voltage of the secondary battery; and charging current detection means for detecting a charging current supplied to the secondary battery, wherein the communication means is conformed to a CDMA communication schema and a TDMA communication schema, the charging control means performs constant-current and constant voltage charging control when the communication means communicates based on the CDMA communication schema, and the charging control means, while the communication means communicates based on the TDMA communication schema, performs constant-current charging control when a battery voltage of the secondary battery detected by the battery voltage detection means is less than a predetermined voltage threshold value, and stops charging operation when a battery voltage of the secondary battery detected by the battery voltage detection means is equal to or larger than the predetermined voltage threshold value. Thus, during the communication based on the CDMA communication schema, the charging operation can be completed quickly without stopping the charging operation. As a result, the charging operation can be performed efficiently. On the other hand, during the communication based on the TDMA communication schema, such a phenomenon can be prevented from occurring that the completion of the charging operation is erroneously detected thereby to terminate the charging operation despite of a non-full-charge state or to apply an overvoltage to the secondary battery.

Furthermore, the multimode communication terminal according to the invention further includes detection timing generation means for generating, in accordance with the communication schema, a timing for detecting a charging current supplied to the secondary battery by the charging current detection means and a timing for detecting a battery voltage of the secondary battery by the battery voltage detection means, wherein the detection timing generation means generates timings of a predetermined period when the communication means communicates based on the CDMA communication schema, and generates timings avoiding a signal transmission timing of the communication means when the communication means communicates based on the TDMA communication schema. Thus, the optimum detection timings can be set at both the cases where the communication is performed based on the CDMA communication schema and where the communication is performed based on the TDMA communication schema. In particular, since the detection timings are set so as to avoid the signal transmission timings when the communication is performed based on the TDMA communication schema, the charging control can be performed based on the charging current values and the battery voltage values detected at suitable timings for any of the communication schemas.

Furthermore, the multimode communication terminal according to the invention is arranged in a manner that the charging control means switches the charging control method in accordance with switching of the communication schema for communication performed by the communication means. Thus, even when the communication schema is switched during the charging operation, the charging operation can be controlled so as to conform to the communication schema after the switching.

### <Brief Description of the Drawings>

Fig. 1 is a block diagram showing the configuration of the multimode communication terminal according to the first embodiment;
Fig. 2 is a flowchart for explaining the operation of the multimode communication terminal according to the first embodiment;
Fig. 3 is a block diagram showing the configuration of the multimode communication terminal according to the second embodiment;
Fig. 4 is an explanatory diagram showing charging curves of a secondary battery which is subjected to constant-current and constant voltage charging control;
Fig. 5 is a block diagram showing the configuration of the multimode communication terminal according to the third embodiment; and
Fig. 6 is a timing chart showing the charging current detection timings and the GSM radio signal transmission timings at the multimode communication terminal of the third embodiment.

In the drawings, a reference numeral 10 refers to a first communication unit, 11 to a second communication unit, 12 and 22 to communication schema switching units, 13, 23 and 33 to control units, 14 to a charging control method switching unit, 15 to a first charging control unit, 16 to a second charging control unit, 17 and 26 to secondary batteries, 18 and 27 to external power sources, 20 to a W-CDMA communication unit, 21 to a GSM communication unit, 24 to a charging control unit, 25 and 31 to battery voltage detection units, 30 to a detection timing generation unit, and 32 and 28 to charging current detection units.

### <Best Mode for Carrying Out the Invention>

Hereinafter, embodiments of a multimode communication terminal according to the invention will be explained in detail with reference to the drawings in the order of (a first embodiment), (a second embodiment) and (a third embodiment).

### (First Embodiment)

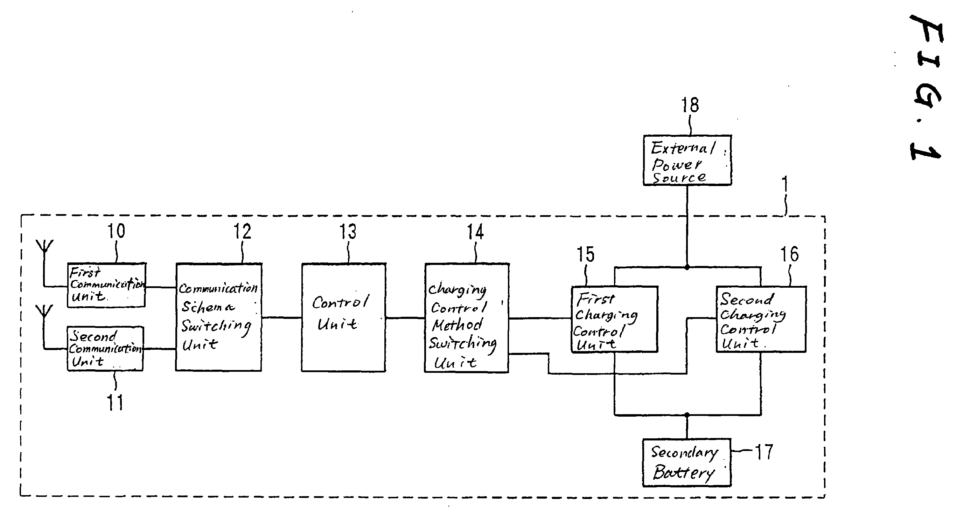

Fig. 1 is a block diagram showing the configuration of the multimode communication terminal according to the first embodiment. As shown in this figure, the multimode communication terminal 1 of the first embodiment is configured to include a first communication unit 10 and a second communication unit 11 corresponding to a communication means of claims, a communication schema switching unit 12 corresponding to a communication schema switching means, a control unit 13, a charging control method switching unit 14 corresponding to a charging control method selecting means, a first charging control unit 15 and a second charging control unit 16 corresponding to a charging control means, and a secondary battery 17. The multimode communication terminal 1 is capable of being coupled to an external power source 18 through an AC adapter so that the external power source 18 can charge the secondary battery 17 through the first charging control unit 15 or the second charging control unit 16.

Hereinafter, the explanation will be made as to the respective constituent elements of the multimode communication terminal 1 according to the embodiment.

The first communication unit 10 communicates with a base station etc. based on the first communication schema. The second communication unit 11 communicates with a base station etc. based on the second communication schema. The communication schema switching unit 12 selects one of the first communication unit 10 and the second communication unit 11 thereby to switch the communication schema. The control unit 13 entirely controls the multimode communication terminal 1 and manages the selecting states of the communication schema switching unit 12 and the charging control method switching unit 14.

The first charging control unit 15 controls the charging operation of the secondary battery 17 when the first communication unit 10 (first communication schema) is selected by the communication schema switching unit 12. The second charging control unit 16 controls the charging operation of the secondary battery 17 when the second communication unit 11 (second communication schema) is selected by the communication schema switching unit 12. The charging control method switching unit 14 selects one of the first charging control unit 15 and the second charging control unit 16 thereby to switch the charging control method. The secondary battery 17 is a power source for the multimode communication terminal 1 and the charging operation of the secondary battery is controlled by the first charging control unit 15 or the second charging control unit 16.

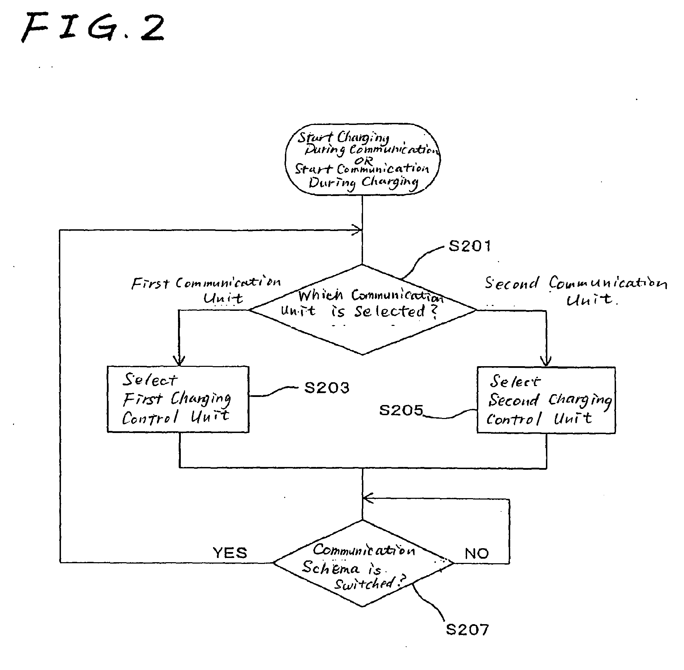

Next, the operation of the multimode communication terminal 1 according to the embodiment will be explained with reference to Fig. 2. Fig. 2 is a flowchart for explaining the operation of the multimode communication terminal 1 according to the first embodiment. In particular, this flowchart explains the charging control method by the control unit 13 at the time of starting the charging operation of the secondary battery 17 while the multimode communication terminal 1 communicates based on the first or second communication schema or at the time of starting communication during the charging operation.

As shown in Fig. 2, the control unit 13 determines as to which one of the first communication unit 10 and the second communication unit 11 is selected by the communication schema switching unit 12 (step S201). When it is determined that the first communication unit 10 is selected in step S201, the process proceeds to step S203, whilst when it is determined that the second communication unit 11 is selected, the process proceeds to step S205. In step S203, the control unit 13 instructs the charging control method switching unit 14 to select the first charging control unit 15. In contrast, in step S205, the control unit 13 instructs the charging control method switching unit 14 to select the second charging control unit 16. After steps S203 and S205, the control unit 13 determines whether or not the communication schema is switched due to hand-over etc. When it is determined that the communication schema is switched, the process returns to step S201.

As explained above, the multimode communication terminal 1 according to this embodiment can control the charging operation in accordance with the communication schema during communication so as to conform to each of a plurality of the communication schemas. Further, even when the communication schema is switched during the charging operation, the charging operation can be controlled so as to conform to the communication schema after the switching.

### (Second Embodiment)

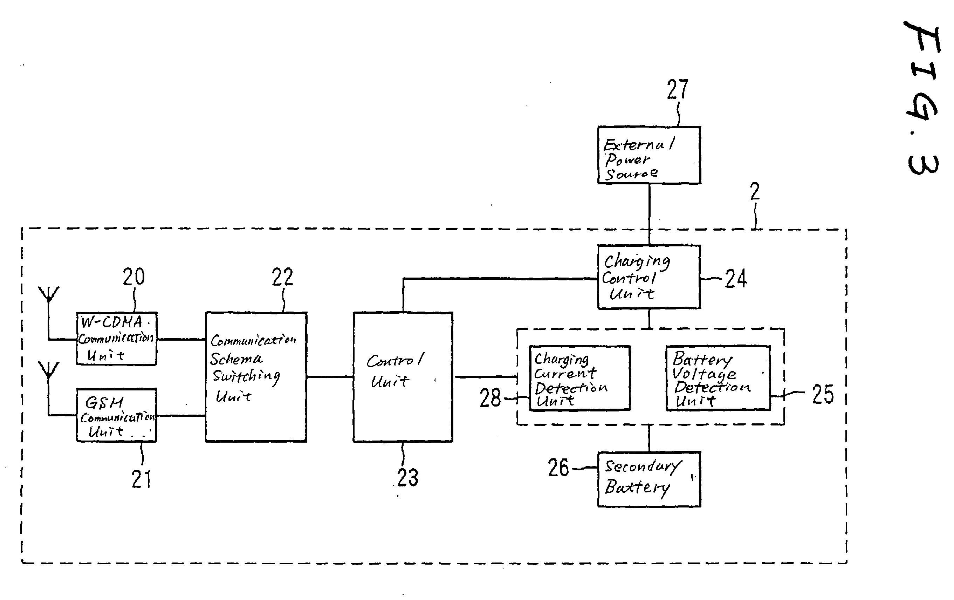

Fig. 3 is a block diagram showing the configuration of the multimode communication terminal according to the second embodiment. As shown in this figure, a multimode communication terminal 2 of the second embodiment is configured to include a W-CDMA communication unit 20 and a GSM communication unit 21 corresponding to a communication means of claims, a communication schema switching unit 12 corresponding to a communication schema switching means, a control unit 23, a charging control unit 24 corresponding to a charging control means and a charging control method selecting means, a battery voltage detection unit 25 corresponding to a battery voltage detection means, a charging current detection unit 28 corresponding to a charging current detection means, and a secondary battery 26. The multimode communication terminal 2 is capable of being coupled to an external power source 27 through an AC adapter so that the external power source 27 can charge the secondary battery 26 through the charging control unit 24.

Hereinafter, the explanation will be made as to the respective constituent elements of the multimode communication terminal 2 according to the embodiment.

The W-CDMA communication unit 20 communicates with a base station etc. based on the CDMA communication schema. The GSM communication unit 21 communicates with a base station etc. based on the TDMA communication schema. The communication schema switching unit 22 switches the communication schema by selecting one of the W-CDMA communication unit 20 and the GSM communication unit 21. The control unit 23 entirely controls the multimode communication terminal 2, manages the selecting states of the communication schema switching unit 22 and instructs the charging control unit 24.

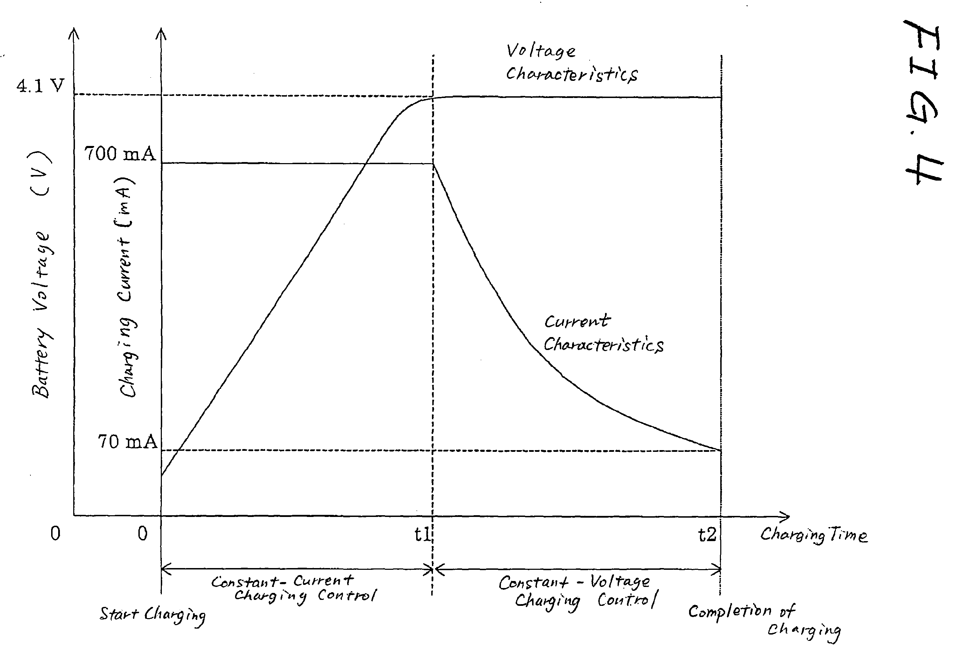

The charging control unit 24 suitably controls the charging operation in accordance with the selected communication unit (the W-CDMA communication unit 20 or the GSM communication unit 21). In this embodiment, the charging control unit 24 performs constant-current and constant-voltage charging control at the time of charging the secondary battery 26 from the external power source 27 when the W-CDMA communication unit 20 is selected. In the constant-current and constant-voltage charging control, a constant-current charging control and a constant voltage charging control are selectively performed in accordance with a charging state in a manner that, as shown in Fig. 4 the constant-current charging control for controlling a charging current to a constant value (for example, 700 mA) is performed until a battery voltage reaches a predetermined threshold voltage value (for example, 4.1 V) after starting the charging operation, whilst the constant voltage charging control for controlling the battery voltage to a constant value (the predetermined threshold voltage value) until the charging current reduces to a predetermined threshold current value (for example, 70 mA) after the battery voltage reaches the predetermined threshold voltage value.

In contrast, the charging control unit 24 controls the charging operation of the secondary battery 26 when the GSM communication unit 21 is selected in a manner that the constant-current charging control is performed when the battery voltage of the secondary battery 26 detected by the battery voltage detection unit 25 is the battery voltage (less than the predetermined threshold voltage value) at the time of performing the aforesaid constant-current charging control, whilst the charging operation is temporarily stopped when the detected battery voltage is equal to or more than the battery voltage (the predetermined threshold voltage value) at the time of performing the aforesaid constant-voltage charging control.

The battery voltage detection unit 25 detects the battery voltage of the secondary battery 26. The battery voltage value detected by the battery voltage detection unit 25 is utilized in order to determine the switching from the constant-current charging to the constant-voltage charging, to perform the constant-voltage charging control by the charging control unit 24 and to stop the charging when the battery voltage becomes an abnormally high or low value. The charging current detection unit 28 detects the charging current supplied to the secondary battery 26. The charging current value detected by the charging current detection unit 28 is utilized in order to perform the constant-current charging control by the charging control unit 24, to complete the charging operation when the charging current reduces to a threshold value or less at the time of the constant voltage charging, and to stop the charging when the battery current becomes an abnormally large value.

The secondary battery 26 is a power source for the multimode communication terminal 2 and the predetermined charging control for the battery is performed by the charging control unit 24 in the aforesaid manner during the charging.

In this embodiment, like the first embodiment, when the communication schema is switched due to the hand-over etc. during the charging, the control unit 23 of the multimode communication terminal 2 switches the instruction to the charging control unit 24 depending on which one of the W-CDMA communication unit 20 and the GSM communication unit 21 is selected.

As explained above, the multimode communication terminal 2 of this embodiment provided with the aforesaid constituent elements performs the constant-current and constant-voltage charging control for the charging during the communication by the W-CDMA communication schema, whilst performs the constant-current charging control by the battery voltage of the secondary battery 26 or the charging operation stop control for the charging during the communication by the GSM communication schema. Further, even when the communication schema is switched during the communication, the charging control conformed to the communication schema after the switching is performed. Thus, during the communication based on the W-CDMA communication schema, the charging operation can be completed quickly without stopping the charging operation. On the other hand, during the communication based on the GSM communication schema, such a phenomenon can be prevented from occurring that the completion of the charging operation is erroneously detected thereby to terminate the charging operation despite of a non-full-charge state or to apply an overvoltage to the secondary battery 26.

Further, since the charging control unit 24 can be commonly used at the time of communicating based on the GSM communication schema as well as at the time of communicating based on the W-CDMA communication schema, a circuit for realizing the charging control unit 24 can be made smaller as compared with a circuit including the first charging control unit 15 and the second charging control unit 16 of the first embodiment.

### (Third Embodiment)

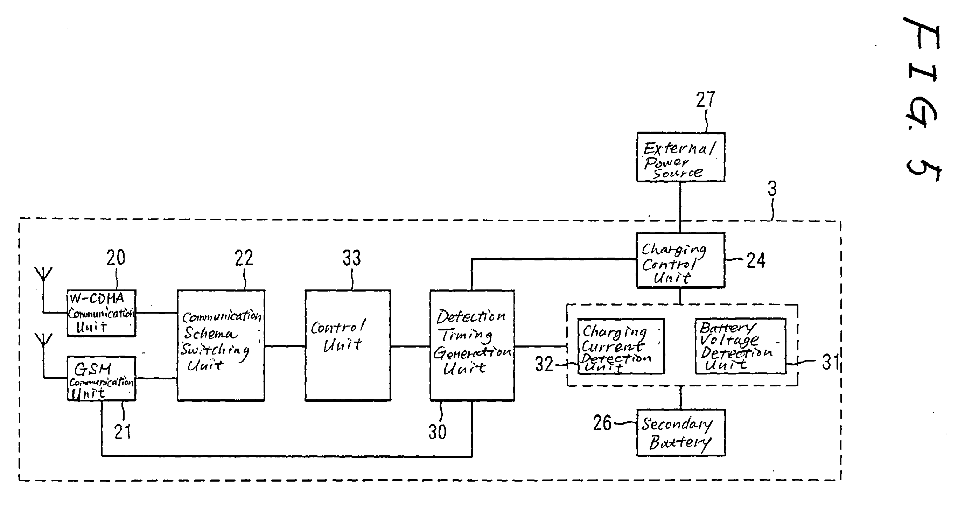

Fig. 5 is a block diagram showing the configuration of the multimode communication terminal according to the third embodiment. In this figure, portions identical to those of Fig. 3 (the second embodiment), that is, the W-CDMA communication unit 20, the GSM communication unit 21, the communication schema switching unit 22, the charging control unit 24 and the secondary battery 26 are referred to by the common symbols, with explanation thereof being omitted. In addition to these constituent elements, the multimode communication terminal 3 according to the third embodiment further includes a control unit 33, a detection timing generation unit 30 corresponding to a detection timing generating means, a battery voltage detection unit 31 corresponding to a battery voltage detection means, and a charging current detection unit 32 corresponding to a charging current detection means.

The control unit 33 entirely controls the multimode communication terminal 3, manages the selecting operation of the communication schema switching unit 12, instructs the charging control unit 24 and instructs timings to the detection timing generation unit 30 in accordance with the communication schema during the communication. The timing instruction to the detection timing generation unit 30 means to instruct the detection timing generation unit 30 so as to generate detection timings of the charging current or the battery voltage at predetermined timings when the W-CDMA communication unit 20 is selected, and to instruct the detection timing generation unit 30 to generate detection timings avoiding the signal transmission timings when the GSM communication unit 21 is selected. The predetermined timings may be an arbitrary period or the frame period of the W-CDMA communication schema.

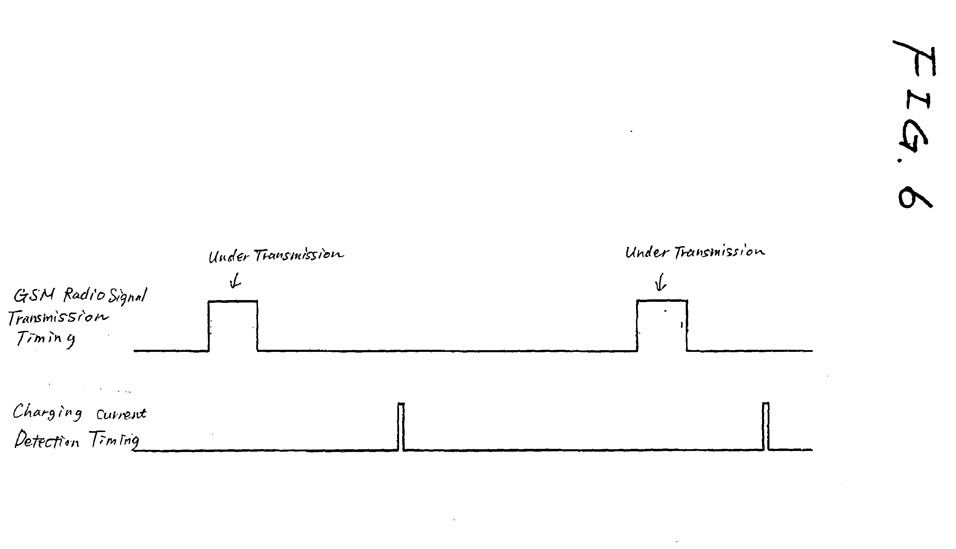

The detection timing generation unit 30 generates timings for detecting the battery voltage of the secondary battery 26 and the charging current supplied to the secondary battery 26 at timings avoiding the GSM transmission timings based on the timings instructed from the control unit 33, timings of the predetermined period or the GSM system timings from the GSM communication unit 21. Thus, as shown in Fig. 6, each of the charging current detection unit 32 and the battery voltage detection unit 31 performs the detection at the timings avoiding sections (that is, the radio wave transmission timings) where the GSM communication unit 21 transmits signals. Fig. 6 is a timing chart showing the charging current detection timings and the GSM radio signal transmission timings at the multimode communication terminal 3 of the third embodiment.

The battery voltage detection unit 31 detects the battery voltage of the secondary battery 26 at the timings generated by the detection timing generation unit 30. The charging current detection unit 32 detects the charging current supplied to the secondary battery 26 at the timings generated by the detection timing generation unit 30. The battery voltage value detected by the battery voltage detection unit 31 and the charging current value detected by the charging current detection unit 32 are used for the constant-current and constant-voltage charging control performed by the charging control unit 24.

In this embodiment, like the first or second embodiment, when the communication schema is switched due to the hand-over etc. during the charging, the control unit 33 of the multimode communication terminal 3 switches the instruction to the detection timing generation unit 30 depending on which one of the W-CDMA communication unit 20 and the GSM communication unit 21 is selected.

As explained above, the multimode communication terminal 3 of this embodiment provided with the aforesaid constituent elements sets most suitably the detection timings of the charging current or the battery voltage at each cases where the W-CDMA communication unit 20 is selected and the GSM communication unit 21 is selected. In particular, since the detection timings are set so as to avoid the signal transmission timings when the GSM communication unit 21 is selected, the constant-current and constant-voltage charging control can be performed based on the charging current values and the battery voltage values detected at suitable timings for any of the communication schemas.

Although, in the first to third embodiments explained above, the explanation is made as to the multimode communication terminal conformed to the two kinds of communication schemas, the similar effects can be attained for a multimode communication terminal conformed to three or more kinds of communication schemas. Further, the communication schemas are not limited to the W-CDMA communication schema and the GSM communication schema, but the PDC communication schema, the PHS communication schema or the analog signal communication schema may be applied to the invention. In this case, the charging control is performed so as to conform to the charging characteristics of each of the communication schemas.

It should be clear for those skilled in the art that although the invention has been explained in detail with reference to the particular embodiments, the invention is not limited thereto and various changes and modifications may be made without departing from the spirit of the invention and the scope of the appended claims.

The present application is based on Japanese Patent Application No. 2002-266919 filed on September 12, 2002, the contents of which is incorporated herein by reference.

### <Industrial Applicability>

As explained above, according to the multimode communication terminal of the invention, the charging operation can be controlled in accordance with the communication schema during the communication so as to conform with each of a plurality of the communication schemas.

## Claims

1. A multimode communication terminal having a secondary battery controlling a charging operation of the secondary battery in accordance with a communication schema during communication, said multimode communication terminal comprising:
communication means capable of communicating in accordance with a plurality of communication schemas;
communication schema switching means for controlling the communication means in a manner that a communication schema is switched into a designated communication schema among the plurality of communication schemas thereby to communicate in accordance with the designated communication schema;
charging control means for controlling a charging operation of the secondary battery by a different charging control method in accordance with each of the plurality of communication schemas; and
charging control method selecting means for selecting the charging control method for charging the secondary battery by the charging control means in accordance with the communication schema of communication being performed by the communication means.

2. The multimode communication terminal according to claim 1, further comprising:
battery voltage detection means for detecting a battery voltage of the secondary battery; and
charging current detection means for detecting a charging current supplied to the secondary battery,
wherein the communication means is conformed to a CDMA communication schema and a TDMA communication schema,
wherein the charging control means performs constant-current and constant voltage charging control when the communication means communicates based on the CDMA communication schema, and
wherein, while the communication means communicates based on the TDMA communication schema, the charging control means performs constant-current charging control when a battery voltage of the secondary battery detected by the battery voltage detection means is less than a predetermined voltage threshold value, and stops charging operation when a battery voltage of the secondary battery detected by the battery voltage detection means is equal to or larger than the predetermined voltage threshold value.

3. The multimode communication terminal according to claim 2, further comprising:
detection timing generation means for generating, in accordance with the communication schema, a timing for detecting a charging current supplied to the secondary battery by the charging current detection means and a timing for detecting a battery voltage of the secondary battery by the battery voltage detection means,
wherein the detection timing generation means generates timings of a predetermined period when the communication means communicates based on the CDMA communication schema, and generates timings avoiding a signal transmission timing of the communication means when the communication means communicates based on the TDMA communication schema.

4. The multimode communication terminal according to claim 1, 2 or 3,
wherein the charging control means switches the charging control method in accordance with switching of the communication schema for communication performed by the communication means.
